(19)

Europäisches
Patentamt

European
Patent Office

Office européen
des brevets

(11)　EP 2 402 905 B1

(12)　EUROPEAN PATENT SPECIFICATION

(45) Date of publication and mention
of the grant of the patent:
**07.11.2018 Bulletin 2018/45**

(51) Int Cl.:
***G06T 3/40*** *(2006.01)*　　　***G06T 7/254*** *(2017.01)*

(21) Application number: **11169032.7**

(22) Date of filing: **08.06.2011**

(54) **Apparatus and method for actively tracking multiple moving objects using a monitoring camera**

Vorrichtung und Verfahren zur aktiven Verfolgung mehrerer sich bewegender Objekte mithilfe einer Überwachungskamera

Appareil et procédé pour suivre activement plusieurs objets en mouvement au moyen d'une caméra de surveillance

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2010 KR 20100063192**

(43) Date of publication of application:
**04.01.2012 Bulletin 2012/01**

(73) Proprietor: **Ajou University Industry-Academic Cooperation Foundation Suwon, Gyeonggi-do (KR)**

(72) Inventors:
　• **Cho, Shung-Han**
　　**Gyeonggi-do (KR)**
　• **Hong, Sang-Jin**
　　**Gyeonggi-do (KR)**
　• **Kim, Yang-Weon**
　　**Gyeonggi-do (KR)**
　• **Cho, We-Duke**
　　**Gyeonggi-do (KR)**
　• **Hwang, Yong-Hyeon**
　　**Gyeonggi-do (KR)**
　• **Nam, Yun-Young**
　　**Gyeonggi-do (KR)**

(74) Representative: **Grünecker Patent- und Rechtsanwälte PartG mbB Leopoldstraße 4 80802 München (DE)**

(56) References cited:
**EP-A1- 1 427 212**　　**US-A1- 2004 008 773**
**US-A1- 2005 244 033**

• **HAWORTH C ET AL: "Performance of reference block updating techniques when tracking with the block matching algorithm", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 1, 7 October 2001 (2001-10-07), pages 365-368, XP010564872, DOI: 10.1109/ICIP.2001.959029 ISBN: 978-0-7803-6725-8**
• **HWANG J ET AL: "A visual feedback control system for tracking and zooming a target", POWER ELECTRONICS AND MOTION CONTROL. SAN DIEGO, NOV. 9 - 13, 1992; [PROCEEDINGS OF THE INTERNATIONAL CONFERENCE ON INDUSTRIAL ELECTRONICS, CONTROL, INSTRUMENTATION AND AUTOMATION (IECON)], NEW YORK, IEEE, US, vol. CONF. 18, 9 November 1992 (1992-11-09), pages 740-745, XP010060629, DOI: 10.1109/IECON.1992.254539 ISBN: 978-0-7803-0582-3**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND OF THE INVENTION

### 1. Field of the Invention

The present invention relates generally to an active object tracking apparatus and method, and more particularly, to an apparatus and method for efficiently tracking a moving object in an image.

### 2. Description of the Related Art

These days, due to the increasing need to protect or monitor human or technical resources, video security systems have evolved rapidly, increasing the complexity thereof, and their importance is greater than ever before. In particular, use of these video security systems has dramatically increased i n companies, government offices, banks, etc., for trespassers monitoring and evidence securing.

The conventional video security systems are disadvantageous in that watchmen should keep watching all surveillance areas on monitors of the security systems. However, the growing complexity and expansion of surveillance zones requires automatization of the video security systems.

For example, a method of automatically ringing alarm and tracking an intruder upon detecting a motion of the intruder in a surveillance zone is an example of automatized intruder detection and tracking. Such automatization is indispensable to meet the demands for monitoring many surveillance areas in the complex modern society.

In case of a general video security system, fixed cameras are installed in the surveillance areas where monitoring is required. This video security system using the fixed cameras may likely have dead zones, which are formed in the surveillance areas and at which monitoring is impossible. To remove the dead zones formed by the installation of the fixed cameras, an increased number of fixed cameras may be installed, which, however, increases the cost undesirably.

That is, in the video security systems using a plurality of fixed cameras, each fixed camera can monitor moving objects only within its limited field of vision, making it difficult to fully automatize the object surveillance and tracking feature of the security systems, especially difficult to furnish the advanced automatization feature capable of continuously tracking moving objects.

Besides, the general video security systems use a method of photographing and recording wide areas using fixed cameras. However, because these fixed cameras commonly have a limited resolution, facial images of intruders photographed by the fixed cameras can be hardly identified.

To overcome these shortcomings, an alternative method of introducing fixed digital cameras with an increased resolution may be used, which may, however, increase the amount of image data exponentially, leading to an increase in the recording costs.

Also, in place of the fixed cameras, Pan Tilt Zoom (PTZ) cameras may be used, which can change their shooting directions up and down (by tilting) and left and right (by panning), and offer zoom shooting.

US 2005/244033 A1 refers to a system and method for assuring high resolution imaging of distinctive characteristics of a moving object. The system utilizes both stationary and active or pan-tilt-zoom, PTZ, cameras, wherein the at least one stationary camera acts as a trigger point such that when a person passes through a predefined targeted area of the at least one stationary camera, the system is triggered for object imaging and tracking. Upon the occurrence of a triggering event in the system, the system predicts the motion and position of the person. Based on this predicted position of the person, an active camera that is capable of obtaining an image of the predicted position is selected and may be controlled to focus its image capture area on the predicted position of the person. After the active camera control and image capture processes, the system evaluates the quality of the captured face images and reports the result to the security agents and interacts with the user. The stationary cameras are used to determine the motion of the object through the targeted space, a predicted position of the object is determined so that the active cameras can be controlled to train their image capture areas on the predicted position of the object. This means that the active camera is moved to the correct orientation prior to the object actually being in the predicted position. As a result, the active camera will be at rest when the object arrives at the predicted position and there is less likelihood of blurring due to the movement of the active camera.

US 2004/008773 A1 refers to multiple image processing and synthesis using background image extraction. A wide-angle camera 103 and a zoom camera 104 are installed in a room at a predetermined position in a high vantage point which commands a general view of the room. In particular, the wide-angle camera 103 is adjusted in the optical axis thereof and image magnification thereof so that a desired surveillance area is imaged. The zoom camera 104 starts image capturing in a default setting. A video capturer 109 converts a pickup image into an RGB 24-bit format digital image on a frame-by-frame basis as in the wide-angle camera 103. The image of the video capturer 109 is not output to the object image extractor 114 until the trespasser tracking mode is triggered. During a trespasser tracking mode, an object image extractor 114 extracts an object by comparison of the video with the background image generated by a background image generator 112, and continuously outputs the comparison results to an arbitrary shaper encoder 119. In response to the comparison result on the side of the wide-angle camera 103, the background image generator 112 generates and outputs a background image to the background image encoder 117. A target encoding area is defined by a rectangular area called a bounding box. Requirements must be satisfied in the setup of the bounding box. If the circumscribing rectangular shape is extended to the bounding box, a pre-process in the encoding is eliminated.

Haworth C et al, titled: "Performance of reference block updating techniques when tracking with the block matching algorithm", Proceedings 2001 International Conference on Image processing, ICIP 2001, Thessaloniki, Greece, Oct 7 to 10, 2001, Institute of Electrical and Electronics Engineers, New York, NY, vol. 1, 7 October 2001, pages 365 to 368 refers to a performance of reference block updating techniques when tracking with a block matching algorithm. When using the Block Matching Algorithm it is necessary to update the reference block, since the appearance of an object will usually be changing over time. A use of a Kalman filter, applied to the reference block is known as the most robust strategy and it incurs relatively small overhead. The Kalman filter is applied to the pixels in the reference block and not to the position of the reference block.

## SUMMARY OF THE INVENTION

It is the object of the present invention to provide an active object tracking apparatus and method, which can determine an estimated location of a moving object by tracking the object using a Pan Tilt Zoom, PTZ, camera, and photograph the estimated location of the object in a zoom-in way.

This object is solved by the subject matter of the independent claims.

Preferred embodiments are defined by the dependent claims.

In accordance with one aspect of the present invention, there is provided an apparatus for actively tracking an object. The apparatus includes a camera unit; a motor drive for changing a shooting direction of the camera unit; and a controller for acquiring a first comparative image and a second comparative image in sequence using the camera unit, comparing the first comparative image with the second comparative image, detecting a moving direction and a speed of an identical object existing in the first and second comparative images, determining an estimated location of the object after receipt of the second comparative image based on the detected moving direction and speed, and enlarging and capturing the object in the estimated location of the object.

The controller may form a blob including a contour of the object, and enlarge and capture the blob at a center thereof.

The controller may enlarge the blob in a preset ratio.

The apparatus may further include a display for displaying the enlarged image, or a storage for storing the enlarged image.

In accordance with another aspect of the present invention, there is provided an apparatus for actively tracking an object. The apparatus includes a camera unit; a motor drive for changing a shooting direction of the camera unit; and a controller for acquiring a first comparative image and a second comparative image in sequence using the camera unit, dividing each of the first and second comparative images into a plurality of sectors, comparing a first sector in the first comparative image with a second sector in the second comparative image, which corresponds to the first sector, detecting a moving direction and a speed of an identical object existing in the first and second sectors, determining an estimated location of the object after receipt of the second comparative image based on the detected moving direction and speed, enlarging a sector corresponding to the estimated location of the object among the plurality of sectors, and capturing a target image.

The controller may detect a moving direction and a speed of the object through sequential comparison between the first and second sectors for each of the plurality of sectors, determine an estimated location of the object after receipt of the second comparative image based on the detected moving direction and speed, enlarge a sector corresponding to the estimated location of the object among the plurality of sectors, and capture a target image.

The controller may divide each of the first and second comparative images into a plurality of sectors having a uniform size in an n×m matrix, make the comparison between the first and second sectors sequentially for sectors in a first column to sectors in an m-th column among the sectors in the n×m matrix, and in each column, make the comparison sequentially for a sector in a first row to a sector in an n-th row.

The controller may divide each of the first and second comparative images into a plurality of sectors having a uniform size in an n×m matrix, make the comparison between the first and second sectors sequentially for sectors in a first row to sectors in an n-th row among the sectors in the n×m matrix, and in each row, make the comparison sequentially for a sector in a first column to a sector in an m-th column.

The controller may acquire a third comparative image and a fourth comparative image, divide each of the third and fourth comparative images into a plurality of sectors having the same form as that of the first and second comparative images, compare a third sector in the third comparative image with a fourth sector in the fourth comparative image, which corresponds to the second sector, and detect a moving direction and a speed of an identical object existing in the third and fourth sectors. The comparison between the third and fourth sectors is made only for sectors other than the sector, which corresponds to a target image obtained through the comparison between the first and second comparative images, and is enlarged and captured.

The apparatus may further include a display for displaying the enlarged image, or a storage for storing the enlarged image.

In accordance with further another aspect of the present invention, there is provided a method for actively tracking an object. The method includes (1) acquiring a first comparative image from an image formed on an imaging device; (2) acquiring a second comparative image after acquisition of the first comparative image; (3) comparing the first comparative image with the second comparative image, and detecting a moving direction and a speed of an identical object existing in the first and second comparative images; (4) determining an estimated location of the object after receipt of the second comparative image based on the detected moving direction and speed; and (5) enlarging and capturing the object in the estimated location of the object.

A blob including a contour of the object may be formed, and enlarged at a center thereof in step (5), and the blob may be enlarged in a preset ratio.

In accordance with yet another aspect of the present invention, there is provided a method for actively tracking an object. The method includes (1) acquiring a first comparative image using a camera unit; (2) acquiring a second comparative image using the camera unit; (3) dividing each of the first and second comparative images into a plurality of sectors, comparing a first sector in the first comparative image with a second sector in the second comparative image, which corresponds to the first sector, and detecting a moving direction and a speed of an identical object exiting in the first and second sectors; (4) determining an estimated location of the object after receipt of the second comparative image based on the detected moving direction and speed; and (5) enlarging a sector corresponding to the estimated location of the object among the plurality of sectors, and capturing a target image.

In step (3), the sequential comparison between the first and second sectors may be made for each of the plurality of sectors.

Each of the first and second comparative images may be divided into a plurality of sectors having a uniform size in an n×m matrix. The comparison between the first and second sectors may be made sequentially for sectors in a first column to sectors in an m-th column among the sectors in the n×m matrix, and in each column, the comparison may be made sequentially for a sector in a first row to a sector in an n-th row.

Each of the first and second comparative images may be divided into a plurality of sectors having a uniform size in an n×m matrix. The comparison between the first and second sectors may be made sequentially for sectors in a first row to sectors in an n-th row among the sectors in the n×m matrix, and in each row, the comparison may be made sequentially for a sector in a first column to a sector in an m-th column.

The method may further include (6) acquiring a third comparative image and a fourth comparative image, dividing each of the third and fourth comparative images into a plurality of sectors having the same form as that of the first and second comparative images, comparing a third sector in the third comparative image with a fourth sector in the fourth comparative image, which corresponds to the third sector, and detecting a moving direction and a speed of an identical object existing in the third and fourth sectors. The comparison between the third and fourth sectors may be made only for sectors other than the sector, which corresponds to a target image obtained through the comparison between the first and second comparative images, and is enlarged and captured.

**BRIEF DESCRIPTION OF THE DRAWINGS**

The above and other aspects, features and advantages of certain exemplary embodiments of the present invention will be more apparent from the following description taken in conjunction with the accompanying drawings, in which:

FIG. 1 is a diagram illustrating an active object tracking apparatus according to an embodiment of the present invention;

FIG. 2 is a diagram illustrating a method for forming a blob of an object in an image according to an embodiment of the present invention;

FIG. 3 is a diagram illustrating parameters for movement of a camera depending on an estimated location of an object according to an embodiment of the present invention;

FIGS. 4A and 4B are diagrams illustrating a method for detecting a moving direction and a speed of an object according to an embodiment of the present invention;

FIGS. 5A and 5B are diagrams illustrating a method for determining an estimated location of an object according to an embodiment of the present invention;

FIGS. 6 and 7 are diagrams illustrating different exemplary orders in which sectors are selected in an image according to an embodiment of the present invention;

FIGS. 8A to 8C are diagrams illustrating a method for zoom-shooting one sector and then selecting the next sector according to an embodiment of the present invention; and

FIGS. 9 to 11 are flowcharts illustrating active object tracking methods according to different embodiments of the present invention.

Throughout the drawings, the same drawing reference numerals will be understood to refer to the same elements, features and structures.

**DETAILED DESCRIPTION OF EXEMPLARY EMBODIMENTS**

Exemplary embodiments of the present invention will now be described in detail with reference to the accompanying drawings. In the following description, specific details such as detailed configuration and components are merely provided to assist the overall understanding of exemplary embodiments of the present invention. Therefore, it should be apparent to those skilled in the art that various changes and modifications of the embodiments described herein can be made without departing from the scope of the invention. In addition, descriptions of well-known functions and constructions are omitted for clarity and conciseness.

An active object tracking apparatus and method according to an embodiment of the present invention will be described in detail below with reference to accompanying drawings.

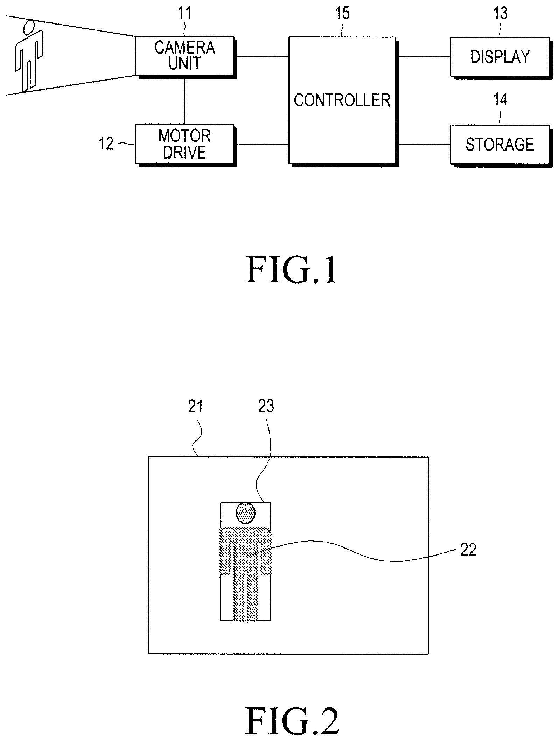

FIG. 1 illustrates an active object tracking apparatus according to an embodiment of the present invention.

As illustrated in FIG. 1, an active object tracking apparatus according to an embodiment of the present invention includes a camera unit 11, a motor drive 12, and a controller 15, and may further include a display 13 and a storage 14.

To be specific, the camera unit 11 scans the light from a subject. The camera unit 11 includes a lens and an imaging device. A Charge-Coupled Device (CCD) or a Complementary Metal-Oxide Semiconductor (CMOS) may be used as the imaging device.

The motor drive 12 rotates a shooting direction of the camera unit 11 so that the center of the lens may face an image portion corresponding to an estimated location of an object. To be specific, the motor drive 12 may rotate the central axis of the lens, or the shooting direction of the camera unit 11, up and down by tilting the camera unit 11 and left and right by panning the camera unit 11.

The controller 15 acquires a first comparative image using the camera unit 11, acquires a second comparative image after acquiring the first comparative image, detects a moving direction and a speed of an identical object existing in the first and second comparative images by comparing the first and second comparative images, determines an estimated location of the object after receipt of the second comparative image based on the detected moving direction and speed, and enlarges and captures an image of the object in the estimated location of the object.

A detailed operation of the controller 15 will be described in the following description of an active object tracking method.

The active object tracking apparatus according to an embodiment of the present invention may include at least one of the display 13 and the storage 14.

The display 13 may include any one of Liquid Crystal Display (LCD), Light Emitting Diodes (LED), Organic Light Emitting Diodes (OLED), Cathode Ray Tube (CRT), and Plasma Display Panel (PDP).

The storage 14 stores video signal data for a screen image converted into a digital signal by the imaging device. The storage 14 may store general programs and applications for operating the active object tracking apparatus.

The active object tracking apparatus according to an embodiment of the present invention may include a wire/wireless communication unit capable of outputting a captured image signal to the outside.

FIG. 2 illustrates a method for forming a blob 23 of an object in an image 21 according to an embodiment of the present invention.

As illustrated in FIG. 2, according to an embodiment of the present invention, the controller 15 forms the object 22 in a rectangular blob 23 including a contour of the object 22, and controls the camera unit 11 to enlarge and capture the blob 23 at the center of the blob 23. The blob 23 is formed in the form of a rectangular including a contour of the object 22, and a moving direction and a speed of the object 22 can be detected using the center of the blob 23.

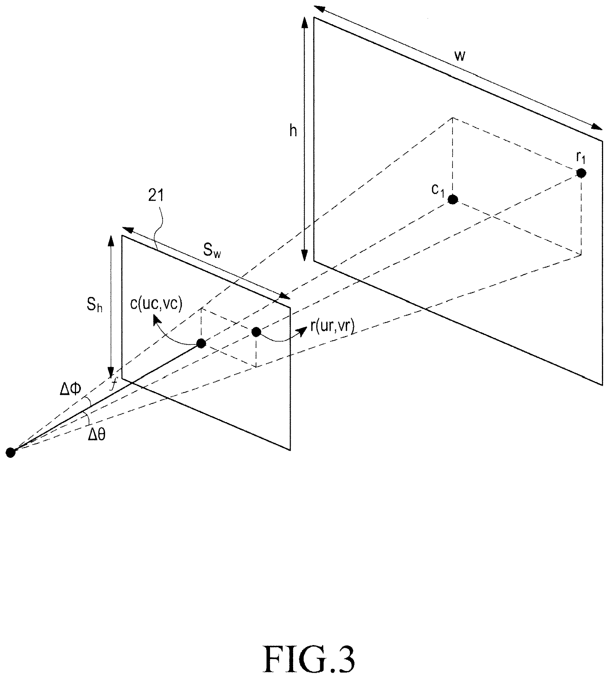

FIG. 3 illustrates parameters for movement of a camera depending on an estimated location of an object according to an embodiment of the present invention.

As illustrated in FIG. 3, when an object actually moves from the central location c1 to a location r1 on a plane, the object appears to move from c to r in an image 21 formed on the imaging device. Therefore, in order to enlarge and capture the object having moved to r in the image 21, a shooting direction of the camera unit 11 should be shifted to face the location r. That is, the shooting direction of the camera unit 11 should be rotated about its rotation axis by a panning angle $\Delta\theta$ and a tilting angle $\Delta\varphi$. If a distance from the rotation axis of the camera unit 11 to the imaging device is defined as f, relationships of Equations (1) and (2) are set between coordinates of c and r, and panning and tilting angles of the camera unit 11.

$$\Delta\varphi = \arctan\left(\frac{vr - vc}{f}\right) \qquad \dots\dots\dots (1)$$

$$\Delta\theta = \arctan\left(\frac{ur - uc}{f}\right) \qquad \dots\dots\dots (2)$$

Although a moving object may be enlarged and captured by changing the panning and tilting angles of the camera unit 11 depending on an estimated location of the object in accordance with Equations (1) and (2), the shooting direction of the camera unit 11 may be changed referring to a look-up table in which panning and tilting angles of the camera unit 11 are tabulated in connection with associated estimated locations of an object.

According to an embodiment of the present invention, as to a zoom ratio of the object, the object may be enlarged in a preset ratio. In the alternative, the zoom ratio may be determined referring to a look-up table in which zoom ratios are tabulated in connection with associated moving directions and speeds of an object. In addition, even in the case where a rectangular blob including a contour of the object is formed and the blob is enlarged and captured at its center, the blob may be enlarged in a preset ratio and its zoom ratio may be determined referring to a look-up table in which zoom ratios are tabulated in connection with associated moving directions and speeds of the center of the blob.

An active object tracking apparatus according to another embodiment of the present invention includes a camera unit 11, a motor drive 12, and a controller 15, and may further include at least one of a display 13 and a storage 14.

To be specific, the camera unit 11 scans the light from a subject. The camera unit 11 includes a lens and an imaging device. A Charge-Coupled Device (CCD) or a Complementary Metal-Oxide Semiconductor (CMOS) may be used as the imaging device.

The motor drive 12 rotates a shooting direction of the camera unit 11 so that the center of the lens may face an image portion corresponding to an estimated location of an object. To be specific, the motor drive 12 may rotate the central axis of the lens, or the shooting direction of the camera unit 11, up and down (by tilting) and left and right (by panning).

The controller 15 acquires a first comparative image and a second comparative image using the camera unit 11, divides each of the first and second comparative images into a plurality of sectors, compares a first sector in the first comparative image with a second sector in the second comparative image, which corresponds to the first sector, detects a moving direction and a speed of an identical object existing in the first and second sectors, determines an estimated location of the object after receipt of the second comparative image based on the detected moving direction and speed, enlarges a sector corresponding to the estimated location of the object among the plurality of sectors, and captures a target image in the enlarged sector.

According to this embodiment, using the camera unit 11, the controller 15 divides each comparative image into a plurality of sectors having a uniform size, and then determines the presence/absence of a motion of an object in each sector. In the presence of a motion of an object, the controller 15 enlarges a sector corresponding to an estimated location of the object.

A detailed operation of the controller 15 will be described in the following description of an active object tracking method.

The display 13 may include any one of LCD, LED, OLED, CRT, and PDP.

The storage 14 stores video signal data for a screen image converted into a digital signal by the imaging device. The storage 14 may store general programs and applications for operating the active object tracking apparatus.

The active object tracking apparatus according to another embodiment of the present invention may include a wire/wireless communication unit capable of outputting a captured image signal to the outside.

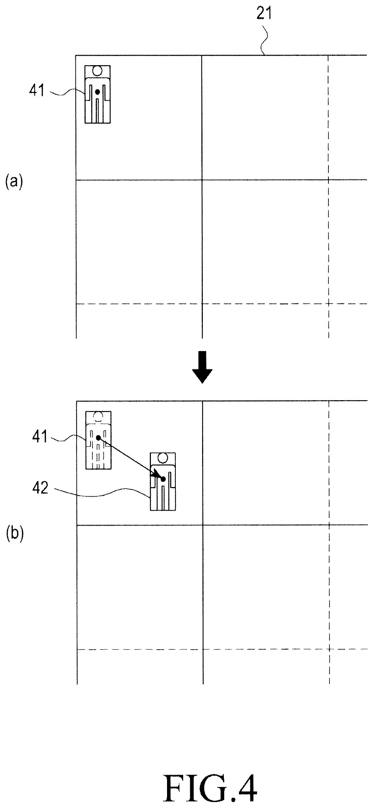

FIGs. 4A to 8 illustrate a sector-based object tracking method for an active object tracking apparatus according to an embodiment of the present invention.

FIGs. 4A and 4B illustrate a method for detecting a moving direction and a speed of an object according to an embodiment of the present invention.

In FIGs. 4A and 4B, a simple method is illustrated, in which for a sector corresponding to a first row and a first column, a moving direction and a speed of an object is calculated using an object in a first comparative image and an object in a second comparative image. In this case, when an object in the first comparative image and an image in the second comparative image are detected, a rectangular blob including a contour of each object is formed, and a moving direction and a speed of the object may be calculated depending on the center of the blob.

As to a moving direction of the object, the object has moved in a diagonal direction from the center of a blob 41 to the center of a blob 42. A speed of the object is a value obtained by dividing a distance between the center of the blob 41 and the center of the blob 42 by a time interval between the first and second comparative images. The time interval between the first and second comparative images is simply calculated by the number of frames per second (fps) of an image being captured. For example, if images were captured at a rate of 10fps and a 10-frame interval exists between the first and second comparative images, then the time interval between the first and second comparative images is 1 second.

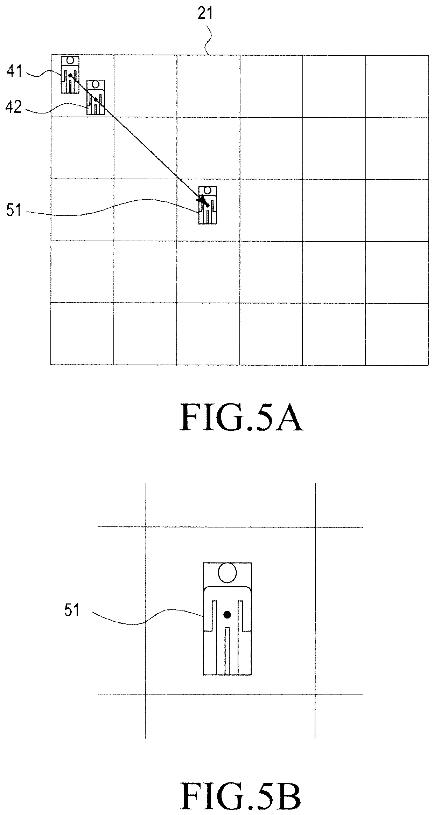

FIGs. 5A and 5B illustrate an example of determining an estimated location of an object according to an embodiment of the present invention. As illustrated in FIG. 5A, using the object 41 in the first comparative image and the object 42 in the second comparative image, an estimated time for an object moving may be considered a sum of a time $T_T$ required for a change in the shooting direction of the camera unit 11 and a time $T_Z$ required for preparing (zooming in) to enlarge and capture the object. If the camera unit 11 can simultaneously perform direction change and zoom-in, the estimated location may be considered the time corresponding to one of $T_T$ and $T_Z$, which is greater than the other.

FIG. 5B illustrates an enlarged captured sector corresponding to the estimated location of the object according to an embodiment of the present invention. A ratio $Z_f$, in which the sector corresponding to the estimated location of the object is enlarged, may be set in advance in various methods. For example, the ratio $Z_f$ may be set as a value obtained by dividing a length of one side of the entire image by a length of one side of the sector. That is, in the example of FIG. 5A, since the entire image is divided into five sectors, the zoom ratio $Z_f$ will be 5.

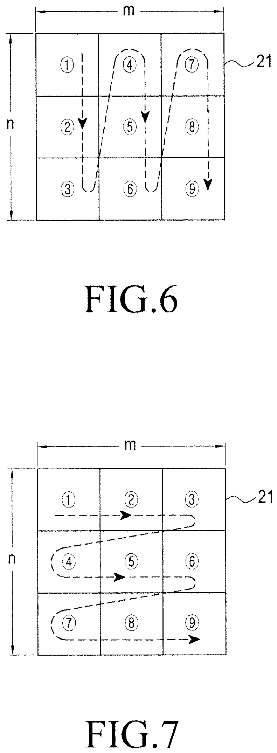

FIGs. 6 and 7 schematically illustrate different sector selection orders in which one sector is selected from a plurality of sectors constituting a screen image and is subject to zoom shooting, according to an embodiment of the present invention.

As illustrated in FIG. 6, the controller 15 divides each of the first and second comparative images into a plurality of sectors having a uniform size in an n×m matrix, and makes the comparison between the first and second sectors sequentially in order of sectors in a first column to sectors in an m-th column among the sectors in the n×m matrix. In each column, the comparison is made sequentially in order of a sector in a first row to a sector in an n-th row.

As illustrated in FIG. 7, the controller 15 divides each of the first and second comparative images into a plurality of sectors having a uniform size in an n×m matrix, and makes the comparison between the first and second sectors sequentially in order of sectors in a first row to sectors in an n-th row in the n×m matrix. In each row, the comparison is made sequentially in order of a sector in a first column to a sector in an m-th column.

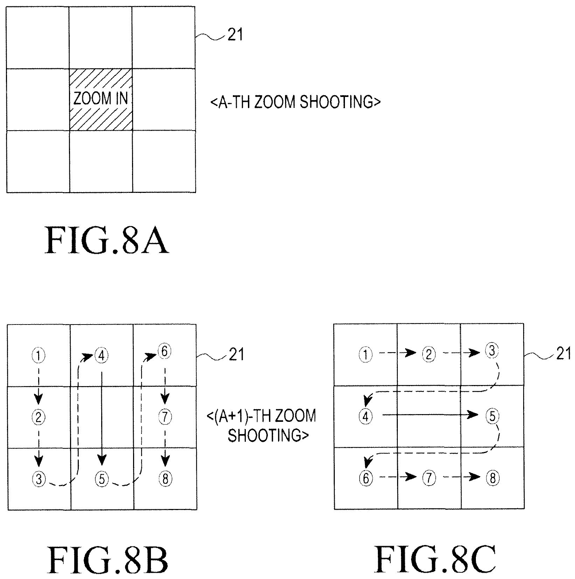

FIGs. 8A to 8C illustrate a method for zoom-shooting one sector and then selecting the next sector according to an embodiment of the present invention.

As illustrated, a screen image of FIG. 8A is divided into sectors constituting a 3×3 matrix. FIG. 8B illustrates a sector selection order corresponding to that of FIG. 6, and FIG. 8C illustrates a sector selection order corresponding to that of FIG. 7.

According to an embodiment of the present invention, for all sectors obtained by dividing each of the first and second comparative images, a sector corresponding to an object, whose estimated location is determined by detecting a moving direction and a speed of the object, is enlarged and captured. Thereafter, third and fourth comparative images being different from the first and second comparative images are acquired, and undergo the same process as above in a repeated manner.

That is, in the next repetition, the controller 15 acquires third and fourth comparative images, divides each of the third and fourth comparative images into a plurality of sectors having the same form as that of the first and second comparative images, compares a third sector in the third comparative image with a fourth sector in the fourth comparative image, which corresponds to the third sector, and detects a moving direction and a speed of an identical object existing in the third and fourth sectors.

As to the comparison between the third and fourth sectors, if a sector corresponding to a target image was enlarged and captured as a result of the comparison between the first and second comparative images, the comparison between the third and fourth sectors is made only for sectors other than the enlarged captured sector.

An example of FIG. 8B will be described in detail. Assuming that in the previous zoom shooting, a sector ① in a first row and a first column was selected and a sector in a second row and a second column was enlarged and captured, a sector to be selected next is a sector ② in the second row and the first column. Next, a sector ③ in a third row and the first column, and a sector ④ in the first row and the second column are selected in turn, and a sector ⑤ in the third row and the second column is selected right away, with the sector in the second row and the second column unselected. Thereafter, a sector ⑥ in the first row and the third column, a sector ⑦ in the second row and the third column, and a sector ⑧ in the third row and the third column are selected in sequence.

Likewise, an example of FIG. 8C will be described. Assuming that that in the previous zoom shooting, a sector ① in a first row and a first column was selected and a sector in a second row and a second column was enlarged and captured, a sector to be selected next is a sector ② in the first row and the second column. Next, a sector ③ in the first row and a third column, and a sector ④ in the second row and the first column are selected in turn, and a sector ⑤ in the second row and the third column is selected right away, with the sector in the second row and the second column unselected. Thereafter, a sector ⑥ in a third row and the first column, a sector ⑦ in the third row and the second column, and a sector ⑧ in the third row and the third column are selected in sequence.

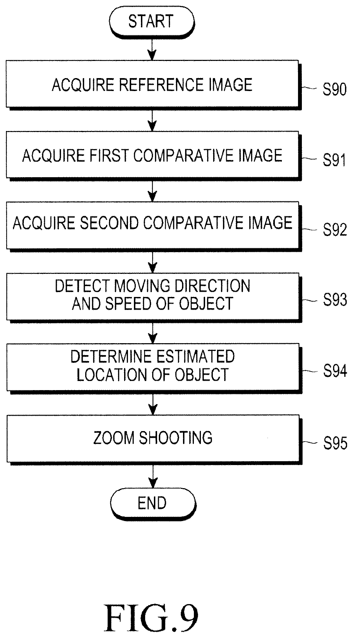

FIG. 9 illustrates an active object tracking method according to an embodiment of the present invention.

As illustrated in FIG. 9, the active object tracking method according to an embodiment of the present invention includes a first step S91 of acquiring a first comparative image from an image formed on an imaging device, a second step S92 of acquiring a second comparative image after acquiring the first comparative image, a third step S93 of detecting a moving direction and a speed of an identical object existing in the first and second comparative images by comparing the first and second comparative images, a fourth step S94 of determining an estimated location of the object after receipt of the second comparative image based on the detected moving direction and speed, and a fifth step S95 of enlarging and capturing the object in the estimated location of the object.

To be specific, in the first and second steps S91 and S92, comparative images are acquired from an image formed on the imaging device to determine a moving direction and a speed of an object appearing in the formed image. The first comparative image is acquired first, and after an elapse of a predetermined time, the second comparative image is acquired. When image frames are captured at a specific rate, the elapsed time may be calculated depending on the number of frames, which makes it possible to acquire the second comparative image, a predetermined number of frames after acquiring the first comparative image. Although one image (frame) may be acquired as the second comparative image, a plurality of images (frames) may be acquired as well.

In the third step S93, a moving direction and a speed of an object are detected using the acquired first and second comparative images. To detect the moving direction and speed of an object, a step of detecting a moving object in each of the first and second comparative images may be added. To detect each object, a residual image between a reference image and the first or second comparative image may be used. That is, a step S90 of acquiring a reference image with no object should precede the first step S91.

An example of a method for calculating a residual image between the reference image and the first comparative image will be described. A color (or brightness) difference between pixels in the same locations in the reference image and the first comparative image is detected, and then the pixels are determined as pixels having a motion, if the difference is greater than or equal to a predetermined value. These pixels having a motion are formed in a group, and this pixel group is determined as an object. Likewise, an object in the second comparative image is also detected using a residual image between the reference image and the second comparative image.

When objects are detected from the first and second comparative images, a moving direction and a speed of an object are determined using the detected objects. The moving direction is determined as a direction from the object in the first comparative image to the object in the second comparative image. The speed is determined by the time interval and object's displacement between the first and second comparative images.

According to an embodiment of the present invention, in determining a moving direction and a speed of an object by detecting the object, a rectangular blob including a contour of the object may be formed and detected. A method of forming the blob has been described in connection with FIG. 5.

In the fourth step S94, an estimated location of the object after receipt of the second comparative image is determined based on the detected moving direction and speed. The reason for determining the estimated location of the object is that because the object may continue to move while the camera unit zooms in for zoom shooting after changing its shooting direction (by panning and tilting) to photograph the object, the location for which the object is heading is estimated in advance and the camera unit is set to face the estimated location before the zoom in.

Assuming that an object moves linearly, an estimated location of the object may be easily estimated using the detected moving direction and speed. However, because the object may move nonlinearly, various other methods may also be considered, such as determining an estimated location taking into account the movement characteristics of an object, and determining an estimated location taking into account the characteristics of surveillance zones.

In the fifth step S95, the object is enlarged and captured in the estimated location of the object. To enlarge and capture the object in the estimated location of the object, the camera unit should first be actuated so that its shooting direction may face the estimated location of the object. The camera unit includes a motor drive 12 so as to change the shooting direction, and by means of the motor drive 12, the camera unit may change its shooting direction left and right (by panning) and up and down (by tilting). Parameters (panning and tilting angles) for movement of the camera unit, associated with the estimated location of the object, have been described above in connection with FIG. 3.

According to an embodiment of the present invention, as to a zoom ratio of the object, the object may be enlarged in a preset ratio. In the alternative, the zoom ratio may be determined referring to a look-up table in which zoom ratios are tabulated in connection with associated moving directions and speeds of an object. In addition, even in the case where a rectangular blob including a contour of the object is formed and the blob is enlarged and captured at its center, the blob may be enlarged in a preset ratio and its zoom ratio may be determined referring to a look-up table in which zoom ratios are tabulated in connection with associated moving directions and speeds of the center of the blob.

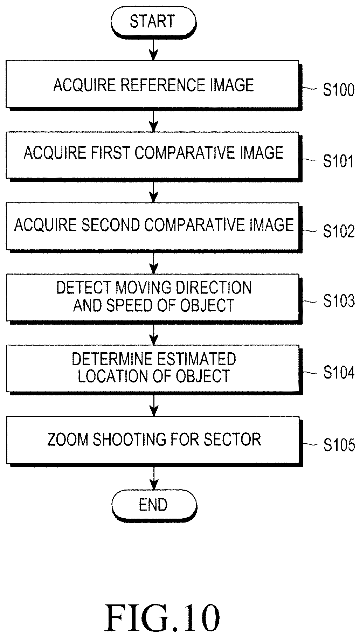

FIG. 10 illustrates an active object tracking method according to another embodiment of the present invention.

As illustrated in FIG. 10, the active object tracking method according to another embodiment of the present invention includes a step S100 of acquiring a reference image using a camera unit, a first step S101 of acquiring a first comparative image using the camera unit, a second step S102 of acquiring a second comparative image using the camera unit, a third step S103 of dividing each of the first and second comparative images into a plurality of sectors, comparing a first sector in the first comparative image with a second sector in the second comparative image, which corresponds to the first sector, and detecting a moving direction and a speed of an identical object existing in the first and second sectors, a fourth step S104 of determining an estimated location of the object after receipt of the second comparative image based on the detected moving direction and speed, and a fifth step S105 of enlarging a sector corresponding to the estimated location of the object among the plurality of sectors and capturing a target image corresponding to the enlarged sector.

Specifically, a reference image is acquired first in step S100 to determine the presence/absence of an object through a comparison between the first and second comparative images. Next, in the first and second steps S101 and S102, comparative images are acquired from an image formed on the imaging device to determine a moving direction and a speed of an object appearing in the formed image. The first comparative image is acquired first, and after a lapse of a predetermined time, the second comparative image is acquired. When image frames are captured at a specific rate, the elapsed time may be calculated depending on the number of frames, which makes it possible to acquire the second comparative image, a predetermined number of frames after acquiring the first comparative image. Although one image (frame) may be acquired as the second comparative image, a plurality of images (frames) may be acquired as well.

In the third step S103, each of the first and second comparative images is divided into a plurality of sectors, and a first sector in the first comparative image is compared with a second sector in the second comparative image, which corresponds to the first sector, to detect a moving direction and a speed of an identical object existing in the first and second sectors.

To detect the moving direction and speed, objects must be detected first from the first and second sectors. Each of the first and second comparative images is divided into a plurality of sectors having the same size in an n×m matrix, where n and m are natural numbers, and may have the same value. In each of the first and second comparative images, one sector (the first sector in the first comparative image, and the second sector in the second comparative image, which corresponds to the first sector) among the plurality of sectors is selected to detect a moving object in the selected sector. The detection/non-detection of an object may be determined through a comparison between the acquired reference image and the related comparative image. A method of detecting an object will be described in brief, by way of example.

The reference image is also divided into a plurality of sectors having the same size in an n×m matrix. A sector in a location corresponding to the first and second sectors among the plurality of sectors is selected. A color (or brightness) difference between pixels in the same locations in the selected sector and the first sector is detected, and then the pixels are determined as pixels having a motion, if the difference is greater than or equal to a predetermined value. These pixels having a motion are formed in a group, and this pixel group is determined as an object. Likewise, objects in the selected sector and the second sector are also detected using a residual image between the reference image and the second comparative image.

When objects are detected from the first and second sectors, a moving direction and a speed of an object are determined using the detected objects. The moving direction is determined as a direction from the object in the first sector to the object in the second sector. The speed is determined by the time interval and object's displacement between the first and second sectors.

According to another embodiment of the present invention, in determining a moving direction and a speed of an object by detecting the object, a rectangular blob including a contour of the object may be formed and detected. A method of forming the blob has been described in connection with FIG. 2.

In the fourth step S104, an estimated location of the object after receipt of the second comparative image is determined based on the detected moving direction and speed. The reason for determining the estimated location of the object is that because the object may continue to move while the camera unit zooms in for zoom shooting after changing its shooting direction (by panning and tilting) to photograph the object, the location for which the object is heading is estimated in advance and the camera unit is set to face the estimated location before the zoom in.

Assuming that an object moves linearly, an estimated location of the object may be easily estimated using the detected moving direction and speed. However, because the object may move nonlinearly, various other methods may also be considered, such as determining an estimated location taking into account the movement characteristics of an object, and determining an estimated location taking into account the characteristics of surveillance zones.

In the fifth step S105, a target image is captured by enlarging a sector corresponding to the estimated location of the object among the plurality of sectors. To enlarge the sector corresponding to the estimated location of the object, the camera unit should first be actuated so that its shooting direction may face the sector corresponding to the estimated location of the object. The camera unit includes a motor drive 12 so as to change the shooting direction, and by means of the motor drive 12, the camera unit may change its shooting direction left and right (by panning) and up and down (by tilting). Parameters (panning and tilting angles) for movement of the camera unit, associated with the estimated location of the object, have been described above in connection with FIG. 3.

A ratio $Z_f$, in which the sector corresponding to the estimated location of the object is enlarged, may be set in advance in various methods. For example, the ratio $Z_f$ may be set as a value obtained by dividing a length of one side of the entire image by a length of one side of the sector. That is, in the example of FIG. 5A, since the entire image is divided into five sectors, the zoom ratio $Z_f$ will be 5.

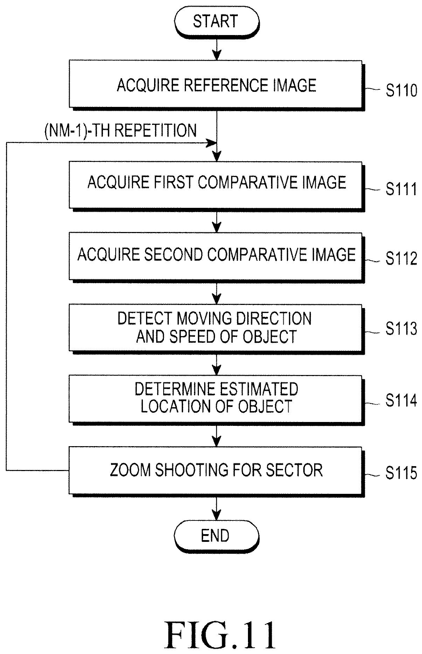

FIG. 11 illustrates an active object tracking method according to further another embodiment of the present invention.

As illustrated in FIG. 11, the active object tracking method according to further another embodiment of the present invention is equal to that in FIG. 10, except that in the third step, the comparison between the first and second sectors is made sequentially for the plurality of sectors. That is, the total number of locations of the plurality of sectors is n×m, and in the embodiment of FIG. 10, the comparison is made for (n×m-1) locations of the remaining sectors except for one location of the sector, for which the comparison was made in advance.

According to an embodiment of the present invention, as to the comparison order for the plurality of sectors in an n×m matrix, the comparison between the first and second sectors is made sequentially for sectors in the first column to sectors in the m-th column among the sectors in the n×m matrix, and in each column, the comparison is made sequentially for a sector in the first row to a sector in the n-th row. This has been described before with reference to FIG. 6.

According to another embodiment of the present invention, as to the comparison order for the plurality of sectors in an n×m matrix, the comparison between the first and second sectors is made sequentially for sectors in the first row to sectors in the n-th row among the sectors in the n×m matrix, and in each row, the comparison is made sequentially for a sector in the first column to a sector in the m-th column. This has been described before with reference to FIG. 7.

According to further another embodiment of the present invention, for all sectors obtained by dividing each of the first and second comparative images, a sector corresponding to an object, whose estimated location is determined by detecting a moving direction and a speed of the object, is enlarged and captured. Thereafter, third and fourth comparative images being different from the first and second comparative images are acquired, and undergo the same process as above in a repeated manner.

In other words, this embodiment further includes a sixth step of acquiring third and fourth comparative images, dividing each of the third and fourth comparative images into a plurality of sectors having the same form as that of the first and second comparative images, comparing a third sector in the third comparative image with a fourth sector in the fourth comparative image, which corresponds to the third sector, and detecting a moving direction and a speed of an identical object existing in the third and fourth sectors.

As to the comparison between the third and fourth sectors, if a sector corresponding to a target image was enlarged and captured as a result of the comparison between the first and second comparative images, the comparison between the third and fourth sectors is made only for sectors other than the enlarged captured sector.

This embodiment has been described before with reference to FIGs. 8A to 8C. As illustrated, a screen image of FIG. 8A is divided into sectors constituting a 3×3 matrix. FIG. 8B illustrates a sector selection order corresponding to that of FIG. 6, and FIG. 8C illustrates a sector selection order corresponding to that of FIG. 7.

Specifically, an example of FIG. 8B will be described. Assuming that in the previous zoom shooting, a sector ① in a first row and a first column was selected and a sector in a second row and a second column was enlarged and captured, a sector to be selected next is a sector ② in the second row and the first column. Next, a sector ③ in a third row and the first column, and a sector ④ in the first row and the second column are selected in turn, and a sector ⑤ in the third row and the second column is selected right away, with the sector in the second row and the second column unselected. Thereafter, a sector ⑥ in the first row and the third column, a sector ⑦ in the second row and the third column, and a sector ⑧ in the third row and the third column are selected in sequence.

Likewise, an example of FIG. 8C will be described. Assuming that that in the previous zoom shooting, a sector ① in a first row and a first column was selected and a sector in a second row and a second column was enlarged and captured, a sector to be selected next is a sector ② in the first row and the second column. Next, a sector ③ in the first row and a third column, and a sector ④ in the second row and the first column are selected in turn, and a sector ⑤ in the second row and the third column is selected right away, with the sector in the second row and the second column unselected. Thereafter, a sector ⑥ in a third row and the first column, a sector ⑦ in the third row and the second column, and a sector ⑧ in the third row and the third column are selected in sequence.

As is apparent from the foregoing description, according to exemplary embodiments of the present invention, a moving object may be actively tracked without dead zones, using a PTZ camera. By doing so, an estimated location of the object may be determined, and a screen image corresponding to the estimated location of the object is enlarged and captured, making it possible to acquire a high-resolution image for an object to be tracked without an increase in the captured image data.

While the invention has been shown and described with reference to certain exemplary embodiments thereof, it will be understood by those skilled in the art that various changes in form and details may be made therein without departing from the scope of the invention as defined by the appended claims.

**Claims**

1. An apparatus for actively tracking an object, the apparatus comprising:

   a camera unit (11) offering zoom shooting;
   a motor drive (12) for changing a shooting direction of the camera unit (11) up and down by tilting and/or left and right by panning; and
   a controller (15) for acquiring a first comparative image and a second comparative image in sequence using the camera unit (11), dividing each of the first and second comparative images into a plurality of sectors, detecting a moving object in a first sector in the first comparative image and in a second sector that corresponds to the first sector in the second comparative image, detecting a moving direction and a speed of the object using the detected object, determining an estimated location of the object after receipt of the second comparative image based on the detected moving direction and speed and based on a time required for a change in the shooting direction of the camera unit and a time required for zooming, enlarging one sector corresponding to the estimated location of the object among the plurality of sectors by actuating the camera unit so that its shooting direction faces the sector corresponding to the estimated location of the object and by zooming in with a given zoom ratio, and capturing a target image,
wherein the controller is further adapted to detect the object by comparing the first comparative image and the second comparative image with a reference image previously acquired.

2. The apparatus of claim 1, wherein the controller (15) is further adapted to divide each of the first and second comparative images into a plurality of sectors having a uniform size in an nxm matrix, to make the comparison between the first and second sectors sequentially for sectors in a first column to sectors in an m-th column among the sectors in the nxm matrix, and in each column, to make the comparison sequentially for a sector in a first row to a sector in an n-th row.

3. The apparatus of claim 1, wherein the controller (15) is further adapted to divide each of the first and second comparative images into a plurality of sectors having a uniform size in an nxm matrix, to make the comparison between the first and second sectors sequentially for sectors in a first row to sectors in an n-th row among the sectors in the nxm matrix, and in each row, to make the comparison sequentially for a sector in a first column to a sector in an m-th column.

4. The apparatus of any one of claims 1, wherein the controller (15) is further adapted to acquire a third comparative image and a fourth comparative image, to divide each of the third and fourth comparative images into a plurality of sectors having the same form as that of the first and second comparative images, to compare a third sector in the third comparative image with a fourth sector in the fourth comparative image, which corresponds to the second sector, and to detect a moving direction and a speed of an identical object existing in the third and fourth sectors, wherein the comparison between the third and fourth sectors is made only for sectors other than the sector, which corresponds to a target image obtained through the comparison between the first and second comparative images, and is enlarged and captured.

5. A method for actively tracking an object at a camera unit (11) offering zoom shooting and to change its shooting direction in up and down by tilting and/or left and right by panning, the method comprising:

   acquiring (S95, S101, S111) a first comparative image from an image formed on an imaging device;
   acquiring (S92, S102, S112) a second comparative image after acquisition of the first comparative image;
   dividing each of the first and second comparative images into a plurality of sectors;
   detecting a moving object in a first sector in the first comparative image and in a second sector that corresponds to the first sector in the second comparative image;
   detecting a moving direction and a speed of the object using the detected object;
   determining (S94, S104, S114) an estimated location of the object after receipt of the second comparative image based on the detected moving direction and speed and based on a time required for a change in the shooting direction of the camera unit and on a time required for zooming; and
   enlarging one sector corresponding to the estimated location of the object among the plurality of sectors by actuating the camera unit so that its shooting direction faces the sector corresponding to the estimated location of the object and by zooming in with a given zoom ratio, and capturing a target image,
   wherein the object is detected by comparing the first comparative image and the second comparative image with a reference image previously acquired.

6. The method of claim 5, further comprising dividing each of the first and second comparative images into a plurality of sectors having a uniform size in an nxm matrix, to make the comparison between the first and second sectors sequentially for sectors in a first column to sectors in an m-th column among the sectors in the nxm matrix, and in each column, to make the comparison sequentially for a sector in a first row to a sector in an n-th row.

7. The method of claim 5, further comprising dividing each of the first and second comparative images into a plurality of sectors having a uniform size in an nxm matrix, to make the comparison between the first and second sectors sequentially for sectors in a first row to sectors in an n-th row among the sectors in the nxm matrix, and in each row, to make the comparison sequentially for a sector in a first column to a sector in an m-th column.

8. The method of claim 5, further comprising acquiring a third comparative image and a fourth comparative image, to divide each of the third and fourth comparative images into a plurality of sectors having the same form as that of the first and second comparative images, to compare a third sector in the third comparative image with a fourth sector in the fourth comparative image, which corresponds to the second sector, and to detect a moving direction and a speed of an identical object existing in the third and fourth sectors, wherein the comparison between the third and fourth sectors is made only for sectors other than the sector, which corresponds to a target image obtained through the comparison between the first and second comparative images, and is enlarged and captured.

**Patentansprüche**

1. Vorrichtung zur aktiven Überwachung eines Objekts, wobei die Vorrichtung umfasst:

    eine Kameraeinheit (11), die eine Zoom-Funktion bietet;
    einen Motorantrieb (12) zur Änderung einer Aufnahmerichtung der Kameraeinheit (11) nach oben und nach unten durch Neigen und/oder nach links und nach rechts durch Schwenken; und
    eine Steuerung (15) zum Erfassen eines ersten Vergleichsbildes und eines zweiten Vergleichsbildes der Reihe nach unter Verwendung der Kameraeinheit (11), zum Unterteilen jeweils des ersten und des zweiten Vergleichsbildes in mehrere Sektoren, zum Erfassen eines bewegten Objekts in einem ersten Sektor in dem ersten Vergleichsbild und in einem zweiten Sektor, der dem ersten Sektor entspricht, in dem zweiten Vergleichsbild, zum Erfassen einer Bewegungsrichtung und einer Geschwindigkeit des Objekts unter Anwendung des erfassten Objekts, zum Ermitteln einer abgeschätzten Position des Objekts nach Empfang des zweiten Vergleichsbildes auf der Grundlage der erfassten Bewegungsrichtung und Geschwindigkeit und auf der Grundlage einer Zeit, die für eine Änderung der Aufnahmerichtung der Kameraeinheit erforderlich ist, und auf der Grundlage einer Zeit, die für die Zoom-Funktion erforderlich ist, wobei ein Sektor, der der abgeschätzten Position des Objekts entspricht, aus den mehreren Sektoren vergrößert wird, indem die Kameraeinheit so angesteuert wird, dass ihre Aufnahmerichtung dem Sektor zugewandt ist, der der abgeschätzten Position des Objekts entspricht, und indem mit einem gegebenen ZoomVerhältnis eine Zoom-Funktion zur Vergrößerung ausgeführt wird und ein Zielobjektbild aufgenommen wird, wobei die Steuerung ferner ausgebildet ist, das Objekt zu erfassen, indem das erste Vergleichsbild und das zweite Vergleichsbild mit einem zuvor erfassten Referenzbild verglichen werden.

2. Vorrichtung nach Anspruch 1, wobei die Steuerung (15) ferner ausgebildet ist, jeweils das erste und das zweite Vergleichsbild in mehrere Sektoren mit einheitlicher Größe in einer nxm-Matrix zu unterteilen, den Vergleich zwischen dem ersten und dem zweiten Sektor sequentiell für Sektoren in einer ersten Spalte zu Sektoren in einer m-ten Spalte aus den Sektoren in der nxm-Matrix auszuführen, und in jeder Spalte den Vergleich sequentiell für einen Sektor in einer ersten Reihe zu einem Sektor in einer n-ten Reihe auszuführen.

3. Vorrichtung nach Anspruch 1, wobei die Steuerung (15) ferner ausgebildet ist, jeweils das erste und das zweite Vergleichsbild in mehrere Sektoren mit einheitlicher Größe in einer nxm-Matrix zu unterteilen, den Vergleich zwischen dem ersten und dem zweiten Sektor sequentiell für Sektoren in einer ersten Reihe zu Sektoren in einer n-ten Reihe aus den Sektoren in der nxm-Matrix auszuführen, und in jeder Reihe den Vergleich sequentiell für einen Sektor in einer ersten Spalte zu einem Sektor in einer m-ten Spalte auszuführen.

4. Vorrichtung nach einem der Ansprüche 1 bis 3, wobei die Steuerung (15) ferner ausgebildet ist, ein drittes Vergleichsbild und ein viertes Vergleichsbild zu erfassen, das dritte und das vierte Vergleichsbild jeweils in mehrere Sektoren mit der gleichen Form wie derjenigen des ersten und des zweiten Vergleichsbildes zu unterteilen, einen dritten Sektor in dem dritten Vergleichsbild mit einem vierten Sektor in dem vierten Vergleichsbild, der dem zweiten Sektor entspricht, zu vergleichen, und eine Bewegungsrichtung und eine Geschwindigkeit eines identischen Objekts, das in dem dritten und dem vierten Sektor vorhanden ist, zu erfassen, wobei der Vergleich zwischen dem dritten und dem vierten Sektor nur für Sektoren durchgeführt wird, die nicht der Sektor sind, der einem Zielobjektbild entspricht, das durch den Vergleich zwischen dem ersten und dem zweiten Vergleichsbild erhalten wird, und das vergrößert und aufgenommen wird.

5. Verfahren zur aktiven Überwachung eines Objekts im Bereich einer Kameraeinheit (11), die eine Zoom-Funktion und eine Änderung ihrer Aufnahmerichtung aufwärts und abwärts durch Neigung und/oder nach links und rechts durch Sschwenken bietet, wobei das Verfahren umfasst:

    Gewinnen (S95, S101, S111) eines ersten Vergleichsbildes aus einem Bild, das auf einer bildgebenden Einrichtung erzeugt ist;

Gewinnen (S92, S102, S112) eines zweiten Vergleichsbildes nach dem Gewinnen des ersten Vergleichsbildes;

Unterteilen jeweils des ersten und des zweiten Vergleichsbildes in mehrere Sektoren;

Erfassen eines bewegten Objekts in einem ersten Sektor in dem ersten Vergleichsbild und in einem zweiten Sektor, der dem ersten Sektor entspricht, in dem zweiten Vergleichsbild;

Erfassen einer Bewegungsrichtung und einer Geschwindigkeit des Objekts unter Anwendung des erfassten Objekts;

Ermitteln (S94, S104, S114) einer abgeschätzten Position des Objekts nach dem Erhalt des zweiten Vergleichsbildes auf der Grundlage der erfassten Bewegungsrichtung und Geschwindigkeit und auf der Grundlage einer Zeit, die zur Änderung der Aufnahmerichtung der Kameraeinheit erforderlich ist und auf der Grundlage einer Zeit, die zum Ausführen einer Zoom-Funktion erforderlich ist; und

Vergrößern eines Sektors der mehreren Sektoren, der der abgeschätzten Position des Objekts entspricht, durch Ansteuern der Kameraeinheit derart, dass ihre Aufnahmerichtung dem Sektor zugewandt ist, der der abgeschätzten Position des Objekts entspricht, und durch Ausführen eines vergrößernden Zoomens mit einem gegebenen ZoomVerhältnis, und Aufnehmen eines Zielobjektbildes,

wobei das Objekt erfasst wird, indem das erste Vergleichsbild und das zweite Vergleichsbild mit einem zuvor gewonnenen Referenzbild verglichen werden.

6. Verfahren nach Anspruch 5, das ferner umfasst: Unterteilen jeweils des ersten und des zweiten Vergleichsbildes in mehrere Sektoren mit einheitlicher Größe in einer nxm-Matrix, Ausführen des Vergleichs zwischen dem ersten und dem zweiten Sektor sequentiell für Sektoren in einer ersten Spalte zu Sektoren in einer m-ten Spalte aus den Sektoren in der nxm-Matrix, und Ausführen des Vergleichs für jede Spalte sequentiell für einen Sektor in einer ersten Reihe zu einem Sektor in einer n-ten Reihe.

7. Verfahren nach Anspruch 5, das ferner umfasst: Unterteilen jeweils des ersten und des zweiten Vergleichsbildes in mehrere Sektoren mit einheitlicher Größe in einer nxm-Matrix, Ausführen des Vergleichs zwischen dem ersten und dem zweiten Sektor sequentiell für Sektoren in einer ersten Reihe zu Sektoren in einer n-ten Reihe aus den Sektoren in der nxm-Matrix, und Ausführen des Vergleichs in jeder Reihe sequentiell für einen Sektor in einer ersten Spalte bis zu einem Sektor in einer m-ten Spalte.

8. Verfahren nach Anspruch 5, das ferner umfasst: Gewinnen eines dritten Vergleichsbildes und eines vierten Vergleichsbildes, Unterteilen jeweils des dritten und des vierten Vergleichsbildes in mehrere Sektoren mit gleicher Form wie in dem ersten und zweiten Vergleichsbild, Vergleichen eines dritten Sektors in dem dritten Vergleichsbild mit einem vierten Sektor in dem vierten Vergleichsbild, der dem zweiten Sektor entspricht, und Erfassen einer Bewegungsrichtung und einer Geschwindigkeit eines identischen Objekts, das in dem dritten und dem vierten Sektor vorhanden ist, wobei der Vergleich zwischen dem dritten und dem vierten Sektor nur für Sektoren ausgeführt wird, die nicht der Sektor sind, der einem Zielobjektbild entspricht, das durch den Vergleich zwischen dem ersten und dem zweiten Vergleichsbild erhalten wird, und das vergrößert und aufgenommen wird.

## Revendications

1. Dispositif pour un suivi actif d'un objet, le dispositif comprenant :

une unité de caméra (11) offrant une prise de vue en zoom ;

un entraîneur de moteur (12) pour un changement d'une direction de prise de vue de l'unité de caméra (11) vers le haut et le bas par une inclinaison et/ou la gauche et la droite par un panoramique ; et

un contrôleur (15) pour une acquisition d'une première image comparative et d'une deuxième image comparative en séquence en utilisant l'unité de caméra (11), une division de chacune des première et deuxième images comparatives en une pluralité de secteurs, une détection d'un objet en déplacement dans un premier secteur dans la première image comparative et dans un deuxième secteur qui correspond au premier secteur dans la deuxième image comparative, une détection d'une direction de déplacement et une vitesse de l'objet en utilisant l'objet détecté,

une détermination d'un emplacement estimé de l'objet après réception de la deuxième image comparative selon la direction et la vitesse de déplacement détectées et selon une durée nécessaire à un changement dans la direction de prise de vue de l'unité de caméra et une durée nécessaire pour un zoom, un agrandissement d'un secteur correspondant à l'emplacement estimé de l'objet parmi la pluralité de secteurs en actionnant l'unité de caméra de sorte que sa direction de prise de vue s'oriente vers le secteur correspondant à l'emplacement estimé de l'objet et en agrandissant par zoom selon un taux de zoom donné, et une capture d'une image cible,

dans lequel le contrôleur est adapté en outre pour détecter l'objet en comparant la première image comparative et la deuxième image comparative avec une image de référence précédemment acquise.

2. Le dispositif de la revendication 1, dans lequel le contrôleur (15) est adapté en outre pour diviser chacune de la première et la deuxième images comparatives en une pluralité de secteurs présentant une taille uniforme dans une matrice nxm, pour effectuer une comparaison entre les premier et deuxième secteurs séquentiellement pour des secteurs dans une première colonne à des secteurs dans une m-ième colonne parmi les secteurs dans la matrice nxm, et dans chaque colonne, pour effectuer la comparaison séquentielle pour un secteur dans une première rangée à un secteur dans une n-ième rangée.

3. Le dispositif de la revendication 1, dans lequel le contrôleur (15) est adapté en outre pour diviser chacune de la première et la deuxième images comparatives en une pluralité de secteurs présentant une taille uniforme dans une matrice nxm, pour effectuer une comparaison entre les premier et deuxième secteurs séquentiellement pour des secteurs dans une première rangée à des secteurs dans une m-ième rangée parmi les secteurs dans la matrice nxm, et dans chaque rangée, pour effectuer la comparaison séquentielle pour un secteur dans une première colonne à un secteur dans une m-ième colonne.

4. Le dispositif de l'une quelconque des revendications 1, dans lequel le contrôleur (15) est adapté en outre pour acquérir une troisième image comparative et une quatrième image comparative, pour diviser chacune des troisième et quatrième images comparatives en une pluralité de secteurs présentant la même forme que celle des première et deuxième images comparatives, pour comparer un troisième secteur dans la troisième image comparative à un quatrième secteur dans la quatrième image comparative, qui correspond au deuxième secteur, et pour détecter une direction de déplacement et une vitesse d'un objet identique existant dans les troisième et quatrième secteurs, dans lequel la comparaison entre les troisième et quatrième secteurs est effectuée uniquement pour des secteurs autres que le secteur, qui correspond à une image cible obtenue via la comparaison entre les première et deuxième images comparatives, et est agrandie et capturée.

5. Procédé pour un suivi actif d'un objet au niveau d'une unité de caméra (11) offrant une prise de vue en zoom et pour changer sa direction de prise de vue vers le haut et le bas par une inclinaison et/ou la gauche et la droite par un panoramique, le procédé comprenant :

acquisition (S95, S101, S111) d'une première image comparative issue d'une image formée sur un dispositif d'imagerie ;
acquisition (S92, S102, S112) d'une deuxième image comparative après acquisition de la première image comparative ;
division de chacune des première et deuxième images comparatives en une pluralité de secteurs ;
détection d'un objet en déplacement dans un premier secteur dans la première image comparative et dans un deuxième secteur qui correspond au premier secteur dans la deuxième image comparative ;
détection d'une direction de déplacement et d'une vitesse de l'objet en utilisant l'objet détecté ;
détermination (S94, S104, S114) d'un emplacement estimé de l'objet après réception de la deuxième image comparative selon la direction de déplacement et la vitesse détectées et selon une durée nécessaire à un changement dans la direction de prise de vue de l'unité de caméra et une durée nécessaire à un zoom; et
agrandissement d'un secteur correspondant à l'emplacement estimé de l'objet parmi la pluralité de secteurs en actionnant l'unité de caméra de sorte que sa direction de prise de vue s'oriente vers le secteur correspondant à l'emplacement estimé de l'objet et en agrandissant par zoom selon un taux de zoom donné, et capture d'une image cible,

dans lequel l'objet est détecté en comparant la première image comparative et la deuxième image comparative avec une image de référence précédemment acquise.

6. Le procédé de la revendication 5, comprenant en outre une division de chacune de la première et la deuxième images comparatives en une pluralité de secteurs présentant une taille uniforme dans une matrice nxm, pour effectuer une comparaison entre les premier et deuxième secteurs séquentiellement pour des secteurs dans une première colonne à des secteurs dans une m-ième colonne parmi les secteurs dans la matrice nxm, et dans chaque colonne, pour effectuer la comparaison séquentielle pour un secteur dans une première rangée à un secteur dans une n-ième rangée.

7. Le procédé de la revendication 5, comprenant en outre une division de chacune de la première et la deuxième images comparatives en une pluralité de secteurs présentant une taille uniforme dans une matrice nxm, pour effectuer une comparaison entre les premier et deuxième secteurs séquentiellement pour des secteurs dans une première rangée à des secteurs dans une m-ième rangée parmi les secteurs dans la matrice nxm, et dans chaque rangée, pour effectuer la comparaison séquentielle pour un secteur dans une première colonne à un secteur dans une m-ième colonne.

8. Le dispositif de la revendication 5, comprenant en outre une acquisition d'une troisième image comparative et une quatrième image comparative, pour diviser chacune des troisième et quatrième images comparatives en une pluralité de secteurs présentant la même forme que celle des première et deuxième images comparatives, pour comparer un troisième secteur dans la troisième image comparative à un quatrième secteur dans la quatrième image comparative, qui correspond au deuxième secteur, et pour détecter une direction de déplacement et une vitesse d'un objet identique existant dans les troisième et quatrième secteurs, dans lequel la comparaison entre les troisième et quatrième secteurs est effectuée uniquement pour des secteurs autres que le secteur, qui correspond à une image cible obtenue via la comparaison entre les première et deuxième images comparatives, et est agrandie et capturée.

FIG.1

FIG.2

FIG.3

FIG.4

# FIG.5A

# FIG.5B

# FIG.6

# FIG.7

21

<A-TH ZOOM SHOOTING>

## FIG.8A

<(A+1)-TH ZOOM SHOOTING>

## FIG.8B

## FIG.8C

START

ACQUIRE REFERENCE IMAGE — S90

ACQUIRE FIRST COMPARATIVE IMAGE — S91

ACQUIRE SECOND COMPARATIVE IMAGE — S92

DETECT MOVING DIRECTION
AND SPEED OF OBJECT — S93

DETERMINE ESTIMATED
LOCATION OF OBJECT — S94

ZOOM SHOOTING — S95

END

# FIG.9

START

ACQUIRE REFERENCE IMAGE — S100

ACQUIRE FIRST COMPARATIVE IMAGE — S101

ACQUIRE SECOND COMPARATIVE IMAGE — S102

DETECT MOVING DIRECTION AND SPEED OF OBJECT — S103

DETERMINE ESTIMATED LOCATION OF OBJECT — S104

ZOOM SHOOTING FOR SECTOR — S105

END

# FIG.10

START

ACQUIRE REFERENCE IMAGE — S110

(NM-1)-TH REPETITION

ACQUIRE FIRST COMPARATIVE IMAGE — S111

ACQUIRE SECOND COMPARATIVE IMAGE — S112

DETECT MOVING DIRECTION
AND SPEED OF OBJECT — S113

DETERMINE ESTIMATED
LOCATION OF OBJECT — S114

ZOOM SHOOTING FOR SECTOR — S115

END

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005244033 A1

- US 2004008773 A1

**Non-patent literature cited in the description**

- Performance of reference block updating techniques when tracking with the block matching algorithm. **HA-WORTH C et al.** Proceedings 2001 International Conference on Image processing, ICIP 2001. Institute of Electrical and Electronics Engineers, 07 October 2001, vol. 1, 365-368